# EUROPEAN PATENT APPLICATION

(11) **EP 2 020 181 A1**
(43) Date of publication of application: **04.02.2009**
(21) Application number: 08159923.5
(22) Date of filing: 08.07.2008
(51) Int. Cl.: A21B 1/48, A21B 1/40

(54) **Air splitter system for food conveyor ovens**

(30) Priority: 30.07.2007 IT PS20070009 U
(71) Applicant: Moretti Forni S.p.A., 61037 Mondolfo (PU) (IT)
(72) Inventor: MORETTI, Marco, 61100, Pesaro (PU) (IT)
(74) Representative: Gustorf, Gerhard

(57) **Abstract**

Air splitter system, particularly for food conveyor ovens, characterised by splitters (21, 22) with external activation mechanisms (29, 30) designed to close the channels (17, 18) inside the forced-air labyrinth.

## Description

### Field of the invention

The field in question concerns conveyor belt "fast-food" ovens: professional tools where the food to be cooked (particularly pizzas) is placed on a conveyor belt which enters and passes through a cooking chamber, and is then carried out on the opposite side, cooked and ready for immediate consumption.

The cooking chambers in such ovens are heated electrically or using fuel burners, generally powered by methane gas or LPG, since these leave minimal traces of fuel residue.

In the most efficient cases, the cooking chamber is equipped with forced air circulation (fan-assisted), ensuring a uniform distribution of heat around the chamber and reducing cooking times.

A fan-assisted cooking chamber for conveyor ovens is described and vindicated under European patent law no. EP 1 882 416 A2, registered on October 11th 2006 with the title "System to optimise the operation of a gas oven with food conveyor" on behalf of the applicant company Moretti Forni S.p.A.

The aforementioned system for optimising the operation of gas ovens includes a continuous flame supply modulator for the burner, deflectors for the preferential differentiated channelling of hot air inside a forced air labyrinth structure and selective shielding of the return air flow over the burner's flame column for reheating.

### Objects of the invention

The main object of the present invention is to create a system with which to govern and regulate forced air circulation inside conveyor ovens.

Another aim is to achieve the first objective by means of a concept of innovation particularly indicated for gas ovens, but which also applies to electrical ovens.

Another aim is to achieve the previous objectives through a concept of innovation applicable to ovens designed for purposes other than food cooking.

Finally, another aim of the present invention is to achieve the previous objectives through a concept of innovation which is simple, effective, safe, and relatively inexpensive considering the practical results obtained.

### Summary of the invention

These as well as other objectives are all achieved with the air splitter system, designed particularly for the food conveyor ovens described in the present document, which includes splitters (21, 22) operated using external handles (29, 30), which close the channels (17, 18) inside the forced-air labyrinth.

### Brief description of the drawings

Further features and advantages of the system mentioned in this document are given in the detailed description that follows for a common, non-exclusive model; this is only an example and is not limited to the three attached drawings, in which:
figure 1 is a cross-sectional drawing of where the conveyor enters the cooking chamber in a gas conveyor oven equipped with the air splitter system according to the present invention;
figure 2 is a cross-section view of the cooking chamber in a gas oven fitted with the air splitter system according to the present invention;
figure 3 shows a lengthwise cross-section view from the rear.

### Static description of the preferred embodiment

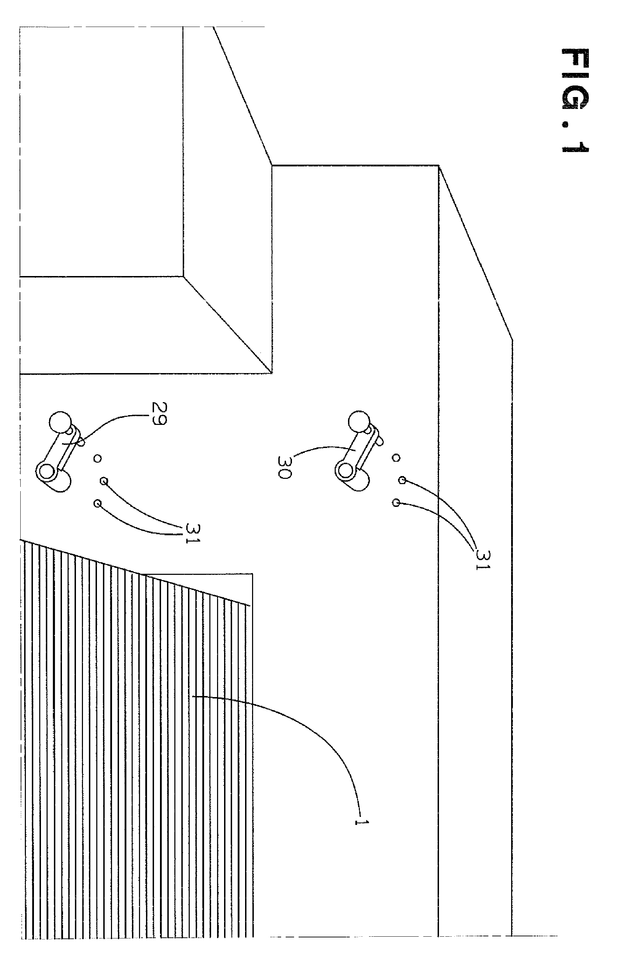

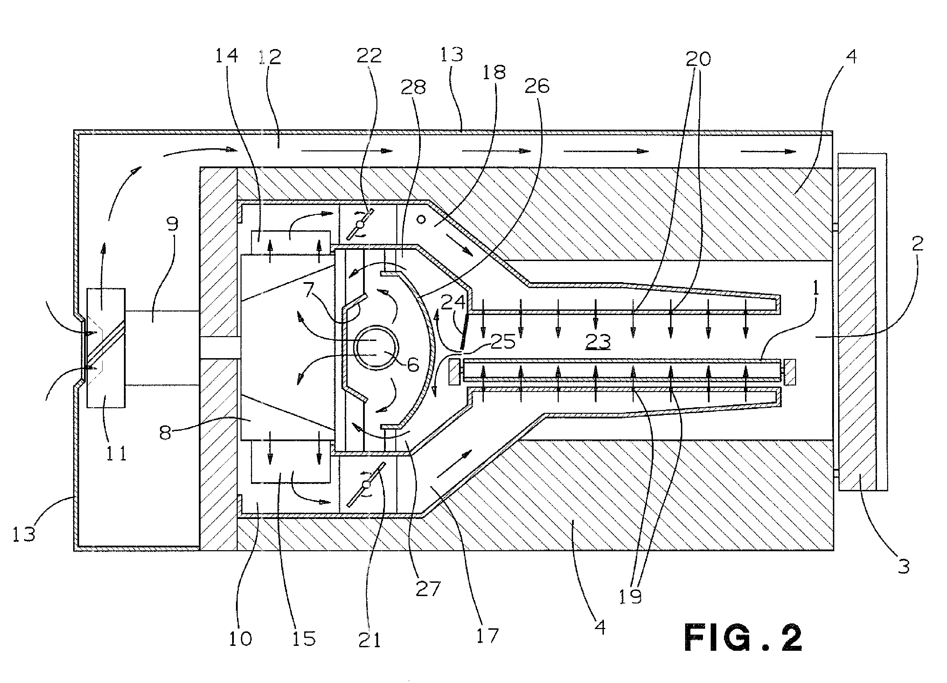

With reference to these figures, especially to figure 1, the number 1 represents the mesh conveyor belt that passes through the cooking chamber 2 (see also figure 2), which can be inspected through a glass front door 3 and is insulated on all sides with thermal insulation material 4, stored in specific interspaces within a gas conveyor oven, as described and illustrated under the Italian patent law for industrial inventions no. PS2006A000024 registered on July 27th 2006 with the title "System to optimise the operation of a gas oven with food conveyor" on behalf of the applicant company Moretti Forni S.p.A.

The cooking chamber 2 is heated by a single gas burner 5 with a flame column 6 positioned parallel to the direction of movement of the conveyor 1, which is situated behind and essentially level to it.

Behind the flame column 6 of the burner 5, where the first section is protected by a partition 7, inside the cooking chamber 2 and in a central position is the blower 8 for the forced air device, comprising a left-rotating centrifugal fan (indicated by the same number) located on the opposite side of the cooking chamber 2, which centrally draws-in air from the blower and expels it peripherally into a ventilation chamber 10 along the length of the cooking chamber 2.

The blower 8 motor 9, which is located outside the ventilation chamber 10 at the rear, operates another external coaxial centrifugal fan 11 that is used to circulate forced air outside the cooking chamber 2 and inside a peripheral space 12 delimited by a sheet metal covering 13.

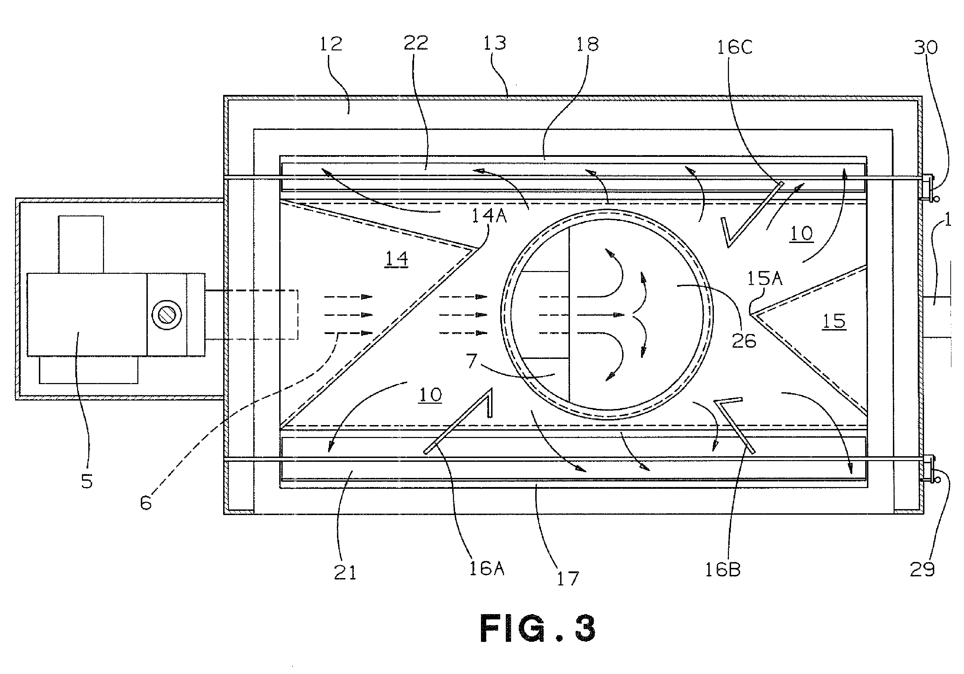

Two angular cusps 14 and 15 (see figure 3) are located on the vertical sides of the ventilation chamber 10. Apex 14A of the left cusp 14, with reference to the anti-clockwise rotation of the fan 8 mounted above it, is higher than the horizontal diameter of the fan 8, while apex 15A of the right cusp 15 is positioned axially against the horizontal diameter of fan 8.

Ventilation chamber 10 also contains three radial deflectors 16A, 16B and 16C; one deflector 16A is positioned below the left angular cusp 14 and the other two, 16B and 16C, are below and above the right angular cusp 15 respectively.

The lower 17 and upper 18 feeders exiting the ventilation chamber 10 each have respective openings along the entire length of the ventilation chamber 10 (see figure 3), where the size of the opening for the lower feeder 17 is greater than that for the upper feeder 18 (see figure 2).

The lower 17 and upper 18 feeders cross the cooking chamber 2 transversely, both above and below the mesh conveyor belt 1 respectively (see figure 2), travelling its entire length inside the cooking chamber 2, into which they are emptied by means of their respective distributors 19 and 20, comprising specially drawn lower 19 and upper 20 calibrated holes.

The lower 17 and upper 18 feeders are equipped with lower 21 and upper 22 splitters, respectively.

The transport canal 23 for the food being cooked, composed of the conveyor belt 1 and the upper distributors 20, is partially closed at the rear of the relative extension by a deflector 24, which has a lower opening 25 that runs along the length of the deflector.

Behind this is the convex face of a curved partition 26, which runs parallel to the flame column 6 along its entire length, leaving upper and lower gaps, 27 and 28 respectively.

Splitters 21 and 22 are controlled by external handles 29 and 30 located on the same side on which the conveyor belt 1 enters the cooking chamber 2, and are controlled by selection points 31.

### Dynamic description of the preferred embodiment

After providing a static description of a preferred air splitter system, as described in the present document, a dynamic, or functional, description will now be given:
the flame column 6 of the burner 5 inside the cooking chamber 2 heats the air that is centrally drawn-in by the fan 8; this air is then expelled peripherally by the fan's anti-clockwise rotation;
the hot air expelled is intercepted by the left 14 and right 15 angular cusps, the shape and orientation of which, with apexes 14A and 15A located respectively above and alongside the horizontal level of the fan 8 in relation to its rotation, determine the effect of the hot air, which is magnified by the deflectors 16A, 16B and 16C and split into two air flows that are channelled into the lower 17 and upper 18 feeders. The air forced downwards has a higher flow rate, which is appropriate for the larger-sized lower feeder 17.

Thus, through the lower 17 and upper 18 feeders, the hot air flow reaches the distributors 19 and 20, crosses them and is forced above and below the mesh conveyor belt 2 carrying the pizzas. The increased flow pressure to the lower feeder has the effect of generating a greater amount of heat to the base of the food while thoroughly cooking the toppings, whichever they may be.

After completing the cooking function, the flow of air deriving from the distributors 19 and 20 is then drawn into the channel 23 and, through the opening 25 of the deflector 24 located at the end of the channel, reaches the curved partition 26 where it is split and channelled through the upper 27 and lower 28 fissures, before returning to the flame column 6 to be reheated and to restart the forced air cycle.

Moreover, by operating the handles 29 and 30 on the splitters 21 and 22, it is possible to optimise the air flows through the lower 17 and upper 18 feeders according to the specific cooking requirements, thus increasing the multiple functionality of the system.

### Alternative embodiments

Naturally, there are alternative ways of achieving this effect. Under the innovative concept given by the example above and asserted below, the air splitter system, designed particularly for food conveyor ovens as described in the present document, can be created using similar techniques and mechanics, or fitted with different systems. Similarly, the configurations of all the relative constituents can be varied to achieve the desired objective, particularly through the automation of the movement of air splitters.

### Advantages of the invention

As made clear by the detailed description given above of a preferred method of execution and by the references to certain variations, the air splitter system presented in this document offers specific benefits which meet the requirements of the objective, as well as others; indeed, it presents a functional solution to make the forced air flow in both gas and electrical conveyor ovens more efficient and adjustable.

### 1) KEY TO NUMBERS

1 Mesh conveyor belt
2 Cooking chamber
3 Front window
4 Installation material with relative interspaces
5 Burner
6 Flame column
7 Blower flame column-protection partition
8 Hot air blower or centrifugal fan
9 Relative motor
10 Ventilation chamber
11 External centrifugal fan for cooling air
12 Peripheral interspace
13 External coating sheet metal
14 Left angular cusp
14A) Relative apex
15 Right angular cusp
15A) Relative apex
16A) Lower radial deflector of left angular cusp
16B) Lower radial deflector of right angular cusp
16C) Upper radial deflector of right angular cusp
17 Lower feeder
18 Upper feeder
19 Law distributors and lower calibrated holes
20 Upper distributors and upper calibrated holes
21 Splitter inside lower feeder
22 Splitter inside upper feeder
23 Food transportation channel between conveyor and upper distributors
24 Food transportation channel closure deflector
25 Food transportation channel closure deflector opening
26 Curved partition parallel to flame column
27 Upper fissure in curved partition parallel to flame column
28 Lower fissure in curved partition parallel to flame column
29 Lower splitter external control handle
30 Upper splitter external control handle
31 Relative regulation points

## Claims

1. Air splitter system, particularly for food conveyor ovens, **characterised by** the fact it comprises splitters (21, 22) with external activation mechanisms (29, 30) designed to close the channels (17, 18) inside the forced-air labyrinth.

2. Air splitter system, as previously asserted, **characterised by** the fact that said splitters (21, 22) are positioned respectively inside lower (17) and upper (18) feeders, exiting a ventilation chamber (10) and passing transversely through a cooking chamber (2) respectively above and below a mesh conveyor belt (1), along its entire length inside the cooking chamber (2).

3. Air splitter system, as described in the previous assertion, **characterised by** the fact that said lower feeder (17) has a larger cross-section than that of the upper feeder (18).

4. Air splitter system, as described in each of the previous assertions, **characterised** the fact that said splitters (21, 22) are operated by external mechanisms (29, 30).

5. Air splitter system, as described in each of the previous assertions, **characterised** the fact that said splitters (21, 22) are operated by external mechanisms consisting of respective handles (29, 30) with registration points (31).

6. Air splitter system, as described in each of the previous assertions, **characterised** the fact that said splitters (21, 22) are operated by automatic mechanisms.
